# EUROPEAN PATENT SPECIFICATION

(11) **EP 1 699 710 B1**
(45) Date of publication and mention of the grant of the patent: **11.07.2012**
(21) Application number: 04812320.2
(22) Date of filing: 21.12.2004
(51) Int. Cl.: B65D 81/26, A23L 3/3436, C08L 67/02, C08K 5/098, C09K 15/04, B32B 27/18, B32B 27/36

(54) **OXYGEN SCAVENGER COMPOSITIONS**
SAUERSTOFF ENTFERNENDE ZUSAMMENSETZUNGEN
COMPOSITIONS DE DESOXYGENANT

(30) Priority: 24.12.2003 US 531992 P
(43) Date of publication of application: 13.09.2006
(73) Proprietor: Cryovac, Inc., Duncan, SC 29334 (US)
(72) Inventor: HAVENS, Marvin, Russell, Greer, SC 29650 (US); VE SPEER, Drew, Simpsonville, SC 29681 (US)
(74) Representative: UEXKÜLL & STOLBERG
(86) International application number: PCT/US2004/039774
(87) International publication number: WO 2005/066042

(56) References cited:
- WO-A-99/48963
- US-A- 5 648 020
- US-A- 6 083 585
- US-B1- 6 254 803

## Description

### FIELD OF THE INVENTION

The invention relates to an oxygen scavenger composition and packaging material containing same.

### BACKGROUND OF THE INVENTION

Limiting the exposure of oxygen-sensitive materials, e.g. food products, meats, beverages, pharmaceuticals, etc., to oxygen exposure provides a means to maintain and enhance the quality and shelf life of the packaged product. For example, packaging a food product in a package capable of minimizing oxygen exposure is a means to maintain the quality of the packaged product over an extended time and to retard spoilage of the product so that the product is maintained in inventory longer without wastage and the need for restocking and replacement.

When a container is formed of a metal or glass body and is provided with a hermetically sealed closure, the permeation of oxygen through the body and the closure is theoretically impossible because of the impermeability of the materials from which the body and closure are formed. Metal cans may reliably prevent oxygen ingress. However, in both instances some oxygen ingress may occur by diffusion through the gasket or the like positioned between the container body and its lid. When a container is formed of a plastic material, such as a bottle, plastic bag, film, tray or lid, the permeation of oxygen through the body becomes an issue of importance. Further, the quality of the packaged material tends to deteriorate over time, in part because of dissolved oxygen typically present in the packaged material at the time it is placed in the packaging container and also in part due to oxygen ingress which occurs during storage. It has long been recognized that when conventional containers of these types are used for the storage of oxygen sensitive materials, the shelf life of the stored materials is limited.

In the food packaging industry, several techniques have been developed to limit oxygen-sensitive packaged materials to oxygen exposure. Such techniques include the use of a barrier material or layer (a material or layer having low permeability to oxygen) as part of the packaging; the inclusion of some means capable of consuming oxygen other than the packaging material (e.g. through the use of sachets and the like having material capable of reacting with oxygen); and the creation of a reduced oxygen environment within the package (e.g. modified atmosphere packaging (MAP) and vacuum packaging).

Although each of the above techniques has its place in the industry, it is well recognized that the inclusion of an oxygen scavenger as part of a packaging article is one of the most desirable means of limiting oxygen exposure.

It is known to include an oxygen scavenger in a sheet material. The oxygen scavenger reacts with oxygen that is trapped in the package or that, over time, permeates into the package. For instance, this is described in U.S. Patents 4,536,409 and 4,702,966 and the prior art discussed in these references. The inclusion of oxygen scavengers within the cavity of the package is a form of "active packaging", i.e., the modification of the package to accommodate a means to regulate oxygen exposure. Normally, the modification is in the form of a sachet or the like introduced into the package cavity. Such active packaging devices have the disadvantages of requiring additional packaging operations, potential breakage of the sachet causing contamination of the packaged goods, and uneven or localized scavenging.

Alternately, regulating the exposure to oxygen involves incorporation of an oxygen-scavenging agent directly into the packaging structure itself. For example, oxygen-scavenging agents have been utilized as part of the package element (film, gasket, coating, etc.) rather than by the addition of a separate structure to the package. Such application has been found to provide a more uniform scavenging effect throughout the package and to provide a means of intercepting and scavenging oxygen as it passes through the walls of the package (herein after referred to as "active barrier" application). Incorporation of a scavenger agent is also used to consume oxygen contained in the packaging article either as residual air oxygen in the packaged goods and/or in the void space within the packaging article not occupied by the packaged goods (herein after referred to as "headspace oxygen scavenging" applications). Headspace oxygen scavenging normally entails the removal of large quantities of oxygen from the interior of the package.

Various agents have been proposed as oxygen scavengers. For example, Michael Rooney, in his article "Oxygen Scavenging: A Novel Use of Rubber Photo-Oxidation", Chemistry and Industry, March 20, 1982, Pg. 197-198, describes the use of ethylenically unsaturated compounds as oxygen scavengers when exposed to light.

Attempts to produce active oxygen scavenging barrier products include the incorporation of inorganic powders and/or salts into a polymer matrix used to form packaging. Incorporation of such powders and /or salts has been found to cause degradation of the transparency and mechanical properties (e.g. tear strength) of the packaging material and cause processing difficulties in the fabrication of the packaging material.

Attempts have been made to produce active oxygen scavenging barrier products in which a polyamide-metal catalyst system capable of scavenging oxygen is incorporated into a polymeric packaging material. Such polyamide based systems have the disadvantages of incompatibility with thermoplastic polymers normally used in forming flexible packaging materials, reduced flexibility and heat sealability of the resultant packaging material, and degradation of the polymer's physical properties and structure upon reaction with oxygen.

U.S. Patent 5,399,289, incorporated herein by reference in its entirety, teaches the use of ethylenically unsaturated hydrocarbon polymers (e.g. polybutadiene and like), and copolymers and polymer blends thereof formed by free radical polymerization. This reference teaches that the unsaturation should be limited to 0.01 to 10 equivalents per 100 grams of polymer as the adsorption of oxygen by such systems causes fission of the polymer backbone chain. Such polymers, when reacting with oxygen, normally degrade to low molecular weight products via chain scission and the resultant oxidation by-products can cause degradation of the taste, color and odor of the packaged material (e.g. food products). Further, because these polymers are amorphous, packaging compositions formed with conventional semi-crystalline polymer matrixes are difficult to be blended and processed.

While the prior art compounds may effectively scavenge oxygen, they introduce other problems into packaging. For instance, in summary, the prior art teaches the incorporation of compounds which are ethylenically unsaturated but which often cleave as a consequence of the reactions of the oxygen scavenging process. For example, films containing unsaturated compounds, such as squalene or vegetable oils, produce large amounts of volatile aldehydes and ketones upon oxidation. Unfortunately many of the resultant volatile compounds are not maintained within the film structure and find their way into the headspace of the package. Here they have the potential to degrade the taste, color and/or odor of comestible products.

U.S. Patent 6,254,803 discloses polymers having at least one cyclohexenyl group or functionality as being useful as oxygen scavengers. This reference includes the use of condensation polymers formed from tetrahydrophthalic anhydride, the free acid, and the ester or diester derivatives with a diol or polyol reagent. For example, when the cyclohexenyl containing reactant is a free acid, an anhydride or ester group, the reference teaches that diols, e.g. butanediol, may be used as a co-reactant. Alternatively, the condensation polymer may be formed from a tetrahydrobenzyl alcohol or the corresponding amine or other cyclohexenyl amine which is reacted with compounds having a plurality of functional groups selected from carboxylic acid, acid halide, acid anhydride, isocyanate or mixtures thereof. The teachings of U.S. 6,254,803 are incorporated herein in its entirety by reference.

Although polymers formed from tetrahydrophthalic anhydride and the like according to U.S. 6,254,803 do not generate large amounts of oxidation fission products during scavenging, they have limited utility in applications where a low T_{g} is necessary (e.g. refrigerated headspace oxygen scavenging). When this requirement is met, the referenced polymers, in addition to having low T_{g}, are completely amorphous (exhibit low or no melting point), high melt flow index (low viscosity), high tack properties and are viscous liquids at ambient temperature conditions. Polymers with these properties are not pelletizable or readily handled, and are difficult to process into films and other packaging articles using conventional processing equipment. Further, when such polymers are blended with conventional film-forming polymers, such as polyolefin homo- and co-polymers, the resins are difficult to extrude into uniform films and exhibit undesired high tack properties. Thus, they provide a resultant product that may not be acceptable for packaging applications.

Ideally, a polymeric material useful in an oxygen scavenging composition should exhibit good processing characteristics, be able to be formed into useful packaging materials, have high compatibility with those polymers commonly used to make packaging materials, and not contain or produce by-products which detract from the color, taste, or odor of the packaged product. Further, the resultant oxygen scavenging composition should be active both under ambient and refrigerated temperature conditions for either headspace oxygen scavenging applications or "active barrier" scavenging applications.

The present invention seeks to address the problems associated with the polymers produced according to US Patent 6,254,803, by seeking to provide compositions that 1) can be readily formed into packaging material in combination with conventional film forming polymers; 2) can be readily processed using conventional film forming equipment (e.g. extrusion equipment) or coating equipment to provide a film substantially free of defects which can be readily handled to provide a finished packaged article; 3) can be used in refrigerated headspace scavenging applications; 4) produce, when reacted with oxygen, very low quantities of scission and oligomeric by-products; 5) act as oxygen scavengers in packaging applications while minimizing the migration of low molecular weight products out of the packaging material containing the compositions and into packaged goods; and 6) can be used under both ambient and refrigerated conditions.

It has been found that an oxygen scavenger composition can be provided by a polyester polymer composed of polymer segments having cycloalkenyl groups; said polyester by either combining it with a second polyester having a high degree of long chain aliphatic groups therein or by combining it with a polyolefin whose structure is dominated by pendant ester groups. The first polyester polymer, when combined with at least one second modifying polymer, as fully described herein below, has been found to provide an oxygen scavenger composition having the desired combination of properties indicated above.

### SUMMARY OF THE INVENTION

The present invention is directed to an oxygen scavenger composition comprising a mixture of (i) a polyester polymer composed of polymer segments containing cycloallcenyl group or functionality; and (ii) a second polymer, which is either a polyester having a high degree of long chain aliphatic groups therein or a polyolefin copolymer whose structure is dominated by pendant ester groups. These materials have in common a propensity of ester groups that provide polarity to the second polymers. It has been found to be optically and mechanically compatible with the oxygen scavenging polyester. They also are of sufficient viscosity to provide the necessary strength and cohesion for the resulting blend. The present polymer composition has been found to act as an oxygen scavenger agent under both ambient and refrigerated conditions, to be compatible with conventional film forming packaging materials, to provide compositions exhibiting low tack, and to be capable of being readily processed using conventional film forming equipment.

Further, the present invention is directed to a film or laminated product suitable for packaging applications composed of at least one layer, wherein at least one of said layers of said film or laminated product comprises a polyester condensation polymer having cycloalkenyl group(s) or functionality, said polyester condensation polymer is blended with a second polymer, which is either a polyester having a high degree of long chain aliphatic groups therein or a polyolefin copolymer whose structure is dominated by pendant ester groups, as fully described herein below.

The present invention, alternatively, is directed to a film or laminated product suitable for packaging applications having at least one layer, wherein at least one of said layers of said film or laminated product comprises a polymeric composition comprising a diluent polymer having substantially uniformly distributed therein said polymer composition, as fully described herein below.

### DETAILED DESCRIPTION

The present invention can be used in packaging articles having various forms. Suitable articles include, but are not limited to, flexible sheet films, flexible bags, pouches, rigid containers or combinations thereof. Typical flexible films and bags include those used to package various food items and may be made up of one or a multiplicity of layers to form the overall film or bag-like packaging material. The oxygen scavenger composition of the present invention can be used in one, some or all of the layers of such packaging material. Materials in the form of flexible films and bags normally have thickness ranging from about 5 to 260 micrometers.

Typical rigid or semi-rigid articles include plastic, paper or cardboard containers, such as those utilized for juices, soft drinks, as well as thermoformed trays or cups and normally have wall thickness in the range of from 100 to 1000 micrometers. The polymeric oxygen scavenger of the present invention can be used as an integral layer or as a coating of the formed semi-rigid or rigid packaging article.

Although it may be preferable from the standpoint of packaging convenience and/or scavenging effectiveness to employ the present invention as an integral part of the packaging wall, the invention can also be used as a non-integral component of this packaging article such as, for example, bottle cap liner, adhesive or non-adhesive sheet insert, sealants, sachet, fibrous mat insert and the like.

Besides packaging articles applicable for food and beverage, packaging for articles for other oxygen-sensitive products can also benefit from the present invention. Such products would include pharmaceuticals, oxygen sensitive medical products, corrodible metals or products, electronic devices, limited lifetime optical storage media and the like.

Although it has been previously reported (See U.S. Patent 6,254,803) that polymers containing certain cyclohexenyl functionalities are good oxygen absorbers when compounded with a transition metal salt and, optionally, a photoinitiator, the use of such polymeric materials, when prepared as necessary for refrigerated oxygen scavenging conditions, has been limited due to the fact that when formed to exhibit low Tg, they are amorphous (exhibit low or no melting point), high melt flow index and high tack properties and, thus, are viscous liquids at ambient temperature conditions. The combination of these properties cause difficulties in conventional processing techniques (e.g. extrusion of films and the like), have low compatibility when combined with conventional film forming polymers and impart poor tack and handling properties to the finished product.

It has now been found that oxygen scavenger compositions comprising a mixture of at least one polyester condensation polymer having cycloalkenyl group(s) or functionality with a second polymer having ester groups, provide improved compositions which maintain a low Tg, yet are non-tacky, solid substances at ambient temperature conditions. The present compositions are capable of being readily processed by conventional techniques. Further, the resultant compositions are compatible and capable of being formed into uniform mixtures with film-forming polyolefins to provide a desirable packaging article, i.e., the composition will have good physical strength, low haze and high clarity. Still further, the resultant materials have good handling properties and are capable of effectively scavenging oxygen under both ambient (20°C to 30°C) and refrigeration (less than 20°C to minus 20 °C, such as from 10°C to minus 15°C, 5°C to minus 10°C, and 5°C to minus 5°C) conditions.

The following terms shall have the meanings indicated herein below when used in the present specification and appended claims unless a contrary intention is expressly indicated:
"aromatic" shall refer to organic molecules and groups having at least one six carbon ring of the benzene and related series or the condensed six carbon rings of naphthalene and related series; said groups may be referred to as aryl, alkaryl or aralkyl groups and the like.
"condensation polymer" shall mean a polymerization product formed by the union of like or unlike molecules which are covalently bonded by a reaction of groups on each molecule with the elimination of water, acid, alcohol or the like, such as the reaction of a hydroxyl group with a carboxylic acid group, an amine group with a carboxylic acid group, a carboxylic acid anhydride group with a hydroxyl group and the like.
"ester type polymer" shall mean a polymer having -C(O)OCH= ester type groups within the polymer structure. Such polymers can be selected from i) substantially linear polyesters formed from at least one dicarboxylic acid and at least one dihydroxyl compound; ii) a polylactone formed by ring opening polymerization to provide an ester group in the polymer chain; or iii) a homopolymer of vinyl acetate or a copolymer of vinyl acetate and a C₂-C₃ olefin having at least 50 weight percent of vinyl acetate therein.
"functional group" shall mean alcohol, carboxylic acid anhydride, carboxylic acid ester, carboxylic acid, halogen, primary, secondary, or tertiary amine, aldehyde, ketone, hydroxyl or sulfonyl group.
"film" shall mean an article suitable for packaging application or suitable for forming an article useful for packaging application wherein the article comprises a flexible article having extended length and width dimensions and a thickness of from 5 to 260 micrometers composed of at least one layer wherein at least one layer comprises the graft copolymer oxygen scavenging composition of the present invention.
"film forming polymer" shall refer to polymers known by those skilled in the art to be capable of forming a flexible, translucent or transparent product having length and width dimensions that are at least 100 times that of the thickness dimension of said product. A polymer, which is capable of forming a membrane-like product.
"hydrocarbyl" shall mean a univalent or divalent organic group composed of hydrogen and carbon, such as group containing 1 to 40 carbon atoms.
"laminated product" shall mean an article suitable for packaging application or suitable for forming a flexible, semi-rigid or rigid article useful for packaging application wherein the article has a thickness of from 100 to 2000 micrometers, comprises at least one layer (and normally a plurality of layers) wherein at least one layer is composed of the polymeric oxygen scavenging composition of the present invention. The laminated product may be in the form of a polymeric film, a polymeric structure, a paper film or structure, a cardboard film or structure, a metal film or structure or the like.
"packaging material" shall generically refer to a flexible films, laminated product and non-integral component suitable for use as part of a packaging article.
"polyester" shall mean a polymerization product having two or more distinct monomeric units which are covalently bonded by the condensation reaction of a hydroxyl group of one unit with a carboÀ-y1 group (free carboxylic acid, the anhydride or a hydrocarbyl ester) of another unit or the polymerization product of a cyclic ester compound (lactones).
"polymer" shall mean a polymerization product composed of a multiplicity of monomeric units (also referred to as "mer units"). The polymer may be a homopolymer composed of a plurality of like monomeric units or a copolymer composed of a plurality of two or more distinct monomeric units.
"polymer segment" shall refer to a portion of a polymer formed from a multiplicity of the same mer units or a plurality of mer units to provide repeating units within the segment. With respect to physical properties described herein in association with a particular polymer segment, the polymer segment shall be viewed as an individual polymer product unless otherwise specifically indicated.
"thermoplastic" shall refer to polymers of a polymer segment composition of the present graft co-polymer that is capable of softening when heated to temperatures above room temperature and hardens again when cooled below said temperature.

The oxygen scavenger polymer composition of the present invention comprises a first polyester condensation polymer (P^{A}) having mer units derived from condensation reaction of:
(a) at least one or a mixture of substituted alicyclic compounds having non-aromatic, ethylenic functionality according to the following representation: 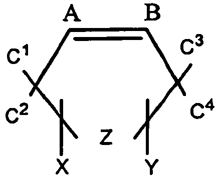 wherein
   A, B, C¹, C², C³, C⁴ each independently represents hydrogen or a C_{q}H_{2q+1} hydrocarbyl group with q being an integer in the range of from 0 to 20, provided that either A or B and at least one of C¹, C², C³, C⁴ are hydrogen atoms and each carbon atom of the alicyclic ring is fully substituted by hydrogen, a hydrocarbyl group or an X or Y group to complete its valence state;
   X and Y each independently or together represents functional groups that are capable of being part of a heteroatom containing linkage forming a covalent bond linkage between the cycloalkenyl group and other monomeric groups forming the condensation polymer. For example, said functional group (both can be a functional group of same identity or an anhydride group) selected from -(CH₂)ₙ-OH, -(CH₂)ₙ-NH₂, -(CH₂)ₙ-N=C=O and -(CH₂)ₙ-C=O)-D with n being an integer in the range from 0 to 20 and D being selected from a halide atom or an OR group where R is an -H or C₁-C₁₂ alkyl group, or X and Y together represent -(CH₂)ₙ-C=O)ₓ-D when D is oxygen, n is an integer of from 0 to 20 and x is 2; and
   Z representing a -(CₜH₂ₜ)- hydrocarbylene group with t being an integer of from 1-4: and
(b) at least one or a mixture of di- or polyfunctional hydrocarbon compounds according to the following representation:

   G-R¹-(G)ₓ

   wherein
   R¹ represents a non-aromatic or aromatic hydrocarbon group, such as, for example hydrocarbyl groups selected from a straight or branched chain alkyl, cycloalkyl, aryl, alkaryl or aralkyl group, any of which may contain heteroatoms which are substantially inert with respect to the condensation polymerization and the oxygen scavenging; and
   each G represents a functional group capable of being part of a heteroatom containing linkage between the hydrocarbyl group and the other monomeric groups forming the condensation polymer, illustrative examples of said functional group being described herein above with respect to X and Y; and
   x is an integer of at least 1, such as from 1 to 5 as, for example, from 1-3.

Examples of monomer (a) used to form said first condensation polymer (P^{A}) may include but are not limited to 1,2,3,6-tetrahydrophthalic acid, *cis-*1,2,3,6-tetrahydrophthalic anhydride, dimethyl-cis-1,2,3,6-tetrahydrophthalate, 3-cyclohexene-1,1- dimethanol, 3,4,5,6-tetrahydrophthalic anhydride, 4-cyclohexene-1,2-diacetic acid, 3-cyclohexene-1,2-diacetic acid, 1-cyclohexene-1,4-dimethanol, 1-cyclohexene-1,2-dimethanol, 3-methyl-4-cyclohexene-1,2-diacetic acid, 1,2,3,6-tetrahydrophthalic acid, dimethyl ester, cis-dimethyl-3-cyclohexene-1,2-diacetate, 4-cyclohexene-1,2-dimethanol, 4-cyclopentene-1,3-diol, cyclohexene-4,5 dimethanol, 1-cyclopentene-1,2-dicarboxylic anhydride, a tetrahydrophthalic anhydride derived from a butadiene, 2,3-dimethyl-1,3-butadiene or isoprene, a cyclohexenyl diamine, and the like..

The monomer (b) used to form said first polyester condensation polymer (P^{A}) is a di- or polyfunctional (via group G) hydrocarbon compound. At least one or mixtures of materials may be used.

More specifically, the hydrocarbon based group R' can be substituted or unsubstituted, cyclic or non-cyclic, linear or branched, aliphatic, aromatic, or mixed aliphatic and aromatic including hydrocarbyl, hydrocarbylene, hydrocarbyloxy, hydrocarbylsilyl, hydrocarbylamino, and hydrocarbylsiloxy groups.

The R¹ group may have G functional groups bonded to the R¹ group at any position of the R¹ group. For example, each G functional group may be terminally bonded to the R¹ group or may be bonded to an internal carbon atom of the R¹ group. Further, there may be two G functional groups or a plurality of greater than two of said groups as, for example three or four of said functional groups bonded to an R¹ group.

Examples of monomer (b) include but are not limited to:
1) alicyclic or aliphatic diols, such as C₂-C₂₀ alkanediols as, for example, ethylene glycol, propanediol, C₄-C₈ alkanediols such as butanediol (all isomers) as, for example, 1,4-butanediol, pentanediol (all isomers), hexanediol (all isomers) as, for example, 1,6-hexanediol, and 1,8-octanediol, as well as 1,10-decanediol, 1,14-tetradecanediol, 1,4-cyclohexanediol, 1,4-cyclohexanedimethanol, diethylene glycol, polyethylene glycol and the like;
2) aromatic diols as, for example 1,3-benzenediol, 1,3-naphthanediol and the like;
3) polyols as, for example, 1,2,3-propanetriol, 1,3,5-pentanetriol, 1,5,8-heptanetriol, trimethylolpropane, neopentyl glycol and the like;
4) diamines as, for example, propylenediamine, butylenediamine, hexylenediamine and the like;
5) isocyanates, as, for example, toluenediisocyanate, hexamethylene diisocyanate and the like;
6) aliphatic or aromatic carboxylic acids or anhydrides, as, for example, trimellitic anhydride, pyromellitic dianhydride, benzophenone tetracarboxylic dianhydride, isophthalic acid, dimethyl isophthalate, terephthalic acid, dimethyl terephthalate, adipic acid, succinic acid and the like, or
7) mixtures of the above materials.

The term "hydrocarbon" moiety or group refers to the R¹ group of monomer (b) to which the linking groups G are directly attached. The hydrocarbon R¹ group has a predominantly hydrocarbon character within the context of the present invention. The term "moiety" and "group" are used herein interchangeably. Such moieties include:
(1) Hydrocarbon groups; that is, aliphatic groups, aromatic groups and alicyclic groups, and the like, which may or may not be substituted, of the type known to those skilled in art.
(2) Substituted hydrocarbon groups; that is, groups containing pendent non-hydrocarbon substituents, that in the context of this invention, do not alter the predominantly hydrocarbon character of the group or interfere with the condensation polymerization and the oxygen scavenging properties of the resultant scavenger material in the contemplated application. Those skilled in the art will be aware of suitable substituents; examples are halo, nitro, silyl, siloxy, alkoxy, carbalkoxy, and alkythio.
(3) Hetero groups; that is, groups which, while predominantly hydrocarbon in character within the context of this invention, contain atoms other than carbon present as a member of the linear structure of a chain or ring otherwise composed of carbon atoms. Suitable heteroatoms will be apparent to those skilled in the art and include, for example, nitrogen, oxygen, silicon and sulfur.

In general, the hydrocarbon based group can be substituted or unsubstituted, cyclic or non-cyclic, linear or branched, aliphatic, aromatic, or mixed aliphatic and aromatic including hydrocarbyl, hydrocarbylene, hydrocarbyloxy, hydrocarbylsilyl, hydrocarbylamino, and hydrocarbylsiloxy groups.

When monomer (a) described above has X and Y groups selected from carboxylic acid groups, alkyl carboxylic acid groups, their lower C₁-C₃ alkyl ester derivatives or X and Y groups together represent an acid anhydride, then monomer (b) described above has at least two G groups and each of said G groups is independently selected from hydroxyl group (preferred) or primary amino group. It is beneficial that two of said G groups are at terminal (alpha, omega) positions of the monomer molecule and that excess G groups over two are pendent from any carbon atom of the R¹ hydrocarbyl group.

The X and Y groups of the alicyclic compound, monomer (a), and the G groups of the polyfunctional compound, monomer (b), are selected from (i) hydroxyl groups or primary amino groups on the one hand, and (ii) carboxylic acid groups, carboxylic acid ester groups, acid halide groups, isocyanate groups or mixtures thereof on the other hand so as to provide a molar ratio of (i) to (ii) of about 1:1 such as from 0.9:1 to 1.1:1, and from 0.95:1 to 1.05:1 being appropriate to form a condensation polymer segment having polyester linkages, polyurethane linkages and/or polyamide linkages between residual monomeric units of (a) and (b). Either (i) or (ii) may be used in excess.

The preparation of the above described first polyester condensation polymer (P^{A}) can be carried out using conventional processes for forming condensation polymerization polymer products. The monomers are contacted at elevated temperature (normally at temperatures of from 120°C to 300°C, such as from 190°C to 260°C) with the elimination of water or other condensation by-product.

The above described polymer (P^{A}) should be composed of from 40 to 60 (such as from 45 to 55) molar percent of at least one monomer (a); and from 60 to 40 (such as from 55 to 45) molar percent of at least one monomer (b). The preferred condensation polymer A (P^{A}) are polyester condensation polymers and more preferably a polyester condensation polymer formed from monomer (a) having X and Y functional groups selected from carboxylic acid, acid ester, acid halide or X and Y together comprise an acid anhydride and the monomer (b) has hydroxyl groups (G).

The present oxygen scavenger composition can be formed by combining the above-described polymer (P^{A}) with one or more than one of the ester-type polymer products fully described herein below.

In a first embodiment of the present invention, the present oxygen scavenging composition can be formed by combining the above described polymer A (P^{A}) with at least one of the below described polymer B (P^{B}).

Polymer B (P^{B}) is selected from second condensation polymers in the form of polyesters formed from diols and diacid compounds having a high content of aliphatic hydrocarbon groups. Polymer B (P^{B}) can be derived from at least one or a mixture of dihydroxy group containing hydrocarbon monomers comprising compounds represented by the following general formula:

**HO-R²-OH**

and at least one or a mixture of dicarboxylic acid group containing aliphatic hydrocarbon monomer comprising compounds represented by the following general formula:

**HOOC- R³-COOH**

wherein
R² and R³ are each independently selected from aliphatic or aromatic hydrocarbylene groups, provided R² or R³ or both are selected from a C₄ or higher (preferably C₄ to C₂₀ and more preferably C₆ to C₂₀) straight (preferred) or branched chain aliphatic hydrocarbylene group to provide at least about 25 (preferably at least 30) mole percent of the resultant polymer B (P^{B}). The hydrocarbon groups R² and R³ have a predominantly hydrocarbon character within the context of the present invention. Each R² and R³ is a hydrocarbon moiety of the scope indicated above with respect to R¹.

The functional groups, the hydroxyl of the dihydroxyl group containing hydrocarbon compound and the carboxyl groups of the dicarboxylic acid group containing hydrocarbon compound, respectively, may be positioned at either the terminal or at an internal position of the hydrocarbon group of the respective compounds. However, they are preferably at the alpha and omega positions of the respective compounds. The subject polymer B (P^{B}), in addition to the above diols and di-acids, may have mer units that are derived from other aliphatic and aromatic di- and polyols and/or di- and polycarboxylic acid compounds provided that the resulting polymer B (P^{B}) is composed of at least 25, preferably at least 30 and more preferably at least 50 mole percent long chain (C₄ or greater, preferably C₆ or greater) aliphatic hydrocarbon moieties.

The monomers used to form polymer B (P^{B}), as described above, may include minor (from about 1 to about 10 mole percent) of polyfunctional (greater than two) hydroxy or carboxy group containing compounds. Such polyfunctional hydroxyl and/or carboxyl compounds provide controlled amounts of branching to the polymer architecture.

Examples of dihydroxyl hydrocarbon compounds used to form the second condensation polymer B (P^{B}) include, but are not limited to all isomers of propandiol, butanediol, pentanediol, hexanediol, heptanediol, octanediol, decanediol, dodecanediol, tetradecanediol, hexadecanediol, octadecanediol and the like mixtures thereof and ether alcohols, such as diethylene glycol, dipropylene glycol and the like and mixtures thereof. In addition, other diols, including lower aliphatic diols such as neopentyl glycol and the like and mixtures thereof, as well as aromatic diol such as pyrocatechol, resorcinol, hydroquinone and the like and mixtures thereof may be used.

Examples of dicarboxylic hydrocarbon compounds that can be used to form the polyester condensation polymer include adipic acid, maleic acid, succinic acid, glutaric acid, pimelic acid, suberic acid, azaleic acid, sebacic acid, 2,4-hexanedicarboxylic acid and the like as well as aromatic dicarboxylic acids such as phthalic acid, isophthalic acid, terephthalic acid and the like and mixtures thereof. Further, the anhydrides of the above acids can be used, such as maleic anhydride, succinic anhydride and the like.

The polyester condensation polymer B (P^{B}) should have sufficient aliphatic hydrocarbon content of either a straight (preferred) or branched chain structure that forms at least about 25 mole percent of the resultant polymer B (P^{B}). Further, the polyester condensation polymer B (P^{B}) should be selected from polymers having a T_{g} of greater than 20 °C but less than 80 °C for polymers that are amorphous. When the resulting polyester is formed from diol and diacid components to provide a crystalline polymer B (P^{B}), i.e., has a crystalline melting point (Tₘ) greater than 20°C, the T_{g} can be below room temperature or even below 0 °C.

For example, when polymer B (P^{B}) is crystalline, such as poly(1,4-butylene adipate), poly(1,6-hexamethylene adipate) or poly(1,4-butylene succinate), it preferably may have a T_{g} of lower than minus 10°C, or more pereferably lower than minus 20°C. When polymer B (P^{B}) is amorphous, the T_{g} will preferably be greater than 20 °C but less than 80 °C, as measured by Differential Scanning Calorimetry according to ASTM D-6604. The desired polymer B (P^{B}) can be formed by those skilled in the art by a wide variety of combinations of suitable hydrocarbon monomers, as described above, using minor experimentation. Finally, the polymer B (P^{B}) preferably has a refractive index within the range of from 1.4 to 1.6, more preferably from 1.45 to 1.55 using an Abbé refractometer or the like.

In a second embodiment of the present invention, the present oxygen scavenger composition can be formed by combining the above-described polymer A (P^{A}) with a polymer C (P^{C}) comprising a polylactone. Polymer C (P^{C}) can be derived from cyclic esters (lactones) represented by the formula: 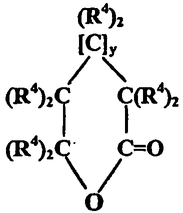 wherein
each R⁴ is independently selected from hydrogen or a C₁-C₃ hydrocarbyl group, preferably hydrogen; and
y is an integer of from 0 to 3, preferably 1 to 3 and most preferably 1 or 2.

The internal cyclic ester is known to be capable of undergoing ring-opening polymerization to provide a substantially stable polyester having a hydrocarbon aliphatic chain between ester linkages. Each aliphatic group is a hydrocarbylene having y + 4 carbon atoms uniformly distributed along the polymer chain. It has been found that the thermodynamics of the formed polyester does not undergo the ester cleavage associated with the equilibrium condensation reaction of diacids and diols when producing polyesters. Thus, these polylactones are capable of retaining and extending their polymerization reaction to produce high molecular weight product.

The lactones capable of forming the subject oxygen scavenger composition in combination with polymer A (P^{A}) should have aliphatic groups that provide at least about 50 weight percent of the resulting polymer C (P^{C}).

The compounds useful in forming the polylactones of polymer C (P^{C}) include, for example, butyrolactone, butyric acid-5-hydroxy-3,4-dimethyl-5-lactone, butyric acid-5-hydroxy-3, 4-diethyl-5-lactone, butyric acid-5-hydroxy-3,3-dimethyl-5-lactone, valerolactone, valeric acid-6-hydroxy-4,4-dimethyl-6-lactone, caprolactone, caproic acid-7-hydroxy-4,5-dimethyl-7-lactone and the like and mixtures thereof. The preferred lactone is ε-caprolactone.

Polymers formed from lactones are commercially available and can be formed by conventional ring opening polymerization of the monomer. It is preferred that polymer C (P^{C}) be selected from polylactones having a T_{g} of lower than 20 °C, preferably lower than 0 °C, such as minus 10°C, and more preferably lower than minus 20°C, and having a Tₘ greater than 20 °C. For example, poly(ε-caprolactone) has a T_{g} = -60°C and Tₘ of about 60 °C. It is further preferred that polymer C (P^{C}) be selected from polylactones having a refractive index within the range of from 1.4 to 1.6, more preferably from 1.45 to 1.55 using an Abbé refractometer or the like.

In a third embodiment of the present invention, the present oxygen scavenger composition can be formed by combining the above-described polymer A (P^{A}) with a polymer D (P^{D}) comprising polyvinylacetate or a copolymer derived from vinyl acetate and a C₂ or C₃ olefin or mixtures thereof having a high content of vinyl acetate therein. Polymer D (P^{D}) can be formed in known manners by free radical polymerization of vinyl acetate to provide the homopolymer or by free radical polymerization of vinyl acetate and either ethylene or propylene or mixtures thereof. Copolymers found useful in the present composition have a high polarity attributable to the high content of pendant ester groups therein. Thus, the polymer D (P^{D}) should have at least 50 weight percent vinyl acetate. The preferred polymer D (P^{D}) is polyvinyl acetate having at least 80 weight percent vinyl acetate and most preferred is polyvinyl acetate homopolymer. Such polymers are commercially available and are normally used in adhesive applications.

Polymer A (P^{A}) can form a physical blend with polymer B (P^{B}) or polymer C (P^{C}) or polymer D (P^{D}) or with mixtures thereof. Instances may occur wherein the polymers A (P^{A}), polymer B (P^{B}) or polymer C (P^{C}), as appropriate, may interact through transesterification and the like to provide polymer product having polymer A (P^{A}) bonded to either polymer B (P^{B}) or polymer C (P^{C}) or both, as appropriate. Thus, some or all of the composition may comprise chemically bonded (covalent and/or ionic) product of polymer A (P^{A}) with polymer B (P^{B}) or with polymer C (P^{C}) or with both. Normally, Polymer A (P^{A}) and polymer D (P^{D}) do not undergo transesterification.

The blending of polymer (P^{A}) with (P^{B}), (P^{C}) and/or (P^{D}) can be conducted at elevated temperatures of from about 100 to 300°C, preferably from about 120 to 250°C. The temperature chosen should be such as to provide a melt state of the polymers in order to enhance their intimate mixing. The upper temperature under which mixing can be conducted should be lower than that which may cause degradation of the polymers being mixed. This can be readily determined for the particular polymers being used by conventional techniques known to those skilled in this art. For example, the polymers can be mixed by introduction of each of the polymers into an extrusion apparatus, having the polymers intimately mix therein and produce an extrusion product which can be in the form of a packaging material or as pellets or the like for further blending with diluent polymer and formation of packaging material therefrom.

The compositions of this invention produce significantly less oxidative by-products caused by the oxygen scavenging process than those described in the prior art, and they do not require the use of high levels of adjuncts to absorb these undesirable by-products. Such absorbent additives are known in the art, for example, see U.S. Pat. No. 5,834,079. It is also well known in the art that such additives (zeolites and silicas) adversely affect the haze and clarity of packaging structures.

The composition of the present invention has been found to enhance the oxygen scavenging performance, especially the low temperature performance in comparison to compositions merely composed of (P^{A}). For example, ethylene glycol/tetrahydrophthalic anhydride condensation polymers that have a T_{g} close to room temperature exhibit very low scavenging properties and this capacity is further decreased under refrigeration temperatures. In contrast, when such condensation polymers are used according to the present invention, it was found to result in enhanced oxygen scavenging performance at both room temperature and refrigerated temperature conditions. Further, the present composition can be readily combined with diluent polymer to form a packaging material having desired properties. For example, the present composition, either alone or when combined with diluent polymer, has improved processing characteristics in comparison to that obtained when using polymer A (P^{A}) alone. Finally, the present composition, either alone or when combined with diluent polymer, provides a packaging product having low tack and good physical properties not achieved by compositions containing polymer A (P^{A}) alone.

The compositions of the present invention can be used in a wide range of packaging materials, and are not restricted to flexible packaging films and articles such as pouches produced from such films. The compositions may also be used in the preparation of rigid and semi-rigid packaging materials. Typical rigid and semi-rigid articles include plastic, paper or cardboard cartons, gable-top cartons, stand-up pouches, bottles such as juice containers, thermoformed trays, or cups with wall thickness of 100 to 2000 microns. The walls of such articles comprise single or multiple layers of materials. The compositions can be used as the sole polymeric material from which one or more layers of a film are formed (i.e., the film can be a multilayer film having, for example, a gas barrier layer, a sealant layer, etc.) or it can be blended with other polymeric oxygen scavenging agents (such as polybutadiene, poly(ethylene/vinyl cyclohexene) or poly(ethylene- methylacrylate/cyclohexenyl-methylacrylate) copolymer (EMCM).

In a preferred embodiment of the present invention, the present compositions has been found to be capable of readily blending with one or more diluent polymers which are known to be useful in the formation of packaging film materials. The resultant blends exhibit desired physical and optical properties and often render the resultant film more flexible and/or processible. Suitable diluent polymers include, but are not limited to, polyethylenes such as, for example, low-density polyethylene, very low-density polyethylene, ultra-low density polyethylene, high-density polyethylene, and linear low density polyethylene; polyesters such as, for example, polyethylene terephthalate (PET) or polyethylene naphthenate (PEN) and ethylene copolymers such as ethylene/vinyl acetate copolymers (EVA), ethylene/alkyl (meth)acrylate copolymers (EMA), ethylene/vinyl alcohol copolymers, ethylene/(meth)acrylic acid copolymers, ethylene/butyl acrylate (EBA) copolymers, ethylene /vinyl alcohol, ethylene/acrylic acid (EAA), and ionomers. Blends of different diluent polymers also can be used.

Generally, the foregoing diluent polymers are semi-crystalline materials. Selection of a particular diluent polymer(s) depends largely on the article to be manufactured and the end use thereon. For instance, certain polymers are known by the ordinarily skilled artisan to provide clarity, toughness, cleanliness, barrier properties, mechanical properties, and/or texture to the resultant article. The incorporation of the present compositions has unexpectedly been found to be highly compatible in the diluent polymers and thereby not detract from the clarity and transparency of the resultant packaging product

The compositions of this invention can also be used in non-integral packaging components such as coatings, sachets, bottle cap liners, adhesive and non adhesive sheet inserts, lamination adhesive, coupons, gaskets, sealants or fibrous mat inserts.

In combination with the polymer components, the oxygen scavenging composition of the present invention may include a transition metal salt, compound or complex, as an oxygen scavenger catalyst. The transition metal can be selected from the first, second, or third transition series of the Periodic Table. The metal can be Rh, Ru, or one of the elements in the series of Sc to Zn (i.e., Sc, Ti, V, Cr, Mn, Fe, Co, Ni, Cu, and Zn). Suitable anions for the salts include, but are not limited to, chloride, acetate, oleate, stearate, palmitate, 2-ethylhexanoate, neodecanoate, and naphthenate. Representative salts include cobalt (II) 2-ethylhexanoate, cobalt oleate, and cobalt (II) neodecanoate. (The metal salt also can be an ionomer, in which case a polymeric counter ion may be employed.)

When used in forming a packaging article, the oxygen scavenging composition of the present invention may include only the above-described polymers and a transition metal catalyst. However, photoinitiators can be added to further facilitate and control the initiation of oxygen scavenging properties. Adding a photoinitiator or a blend of photoinitiators to the oxygen scavenging composition can be beneficial where antioxidants have been added to prevent premature oxidation of the composition during processing and storage.

Suitable photoinitiators are known to those skilled in the art. See, e.g., PCT publication WO 97/07161, WO 97/44364, WO 98/51758, and WO 98/51759, the teachings of which are incorporated herein by reference in their entirety. Specific examples of suitable photoinitiators include, but are not limited to, benzophenone, and its derivatives, such as methoxybenzophenone, dimethoxybenzophenone, dimethylbenzophenone, diphenoxybenzophenone, allyloxybenzophenone, diallyloxybenzophenone, dodecyloxybenzophenone, dibenzosuberone, 4,4'-bis(4-isopropylphenoxy)benzophenone, 4-morpholinobenzophenone, 4-aminobenzophenone, tribenzoyl triphenylbenzene, tritoluoyl triphenylbenzene, 4,4'-bis (dimethylamino)-benzophenone, acetophenone and its derivatives, such as, o-methoxy-acetophenone, 4'-methoxyacetophenone, valerophenone, hexanophenone, a-phenylbutyrophenone, p-morpholinopropiophenone, benzoin and its derivatives, such as, benzoin methyl ether, benzoin butyl ether, benzoin tetrahydropyranyl ether, 4-o- morpholinodeoxybenzoin, substituted and unsubstituted anthraquinones; alpha-tetralone, 9-acetylphenanthrene, 2-acetylphenanthrene, 10-thioxanthenone, 3-acetyl-phenanthrene, 3-acetylindole, 9-fluorenone, 1-indanone, 1,3,5-triacetylbenzene, thioxanthen-9-one, isopropylthioxanthen-9-one, xanthene-9-one, 7-H-benz[de]anthracen-7-one, 1'-acetonaphthone, 2'-acetonaphthone, acetonaphthone, benz[a]anthracene-7,12-dione, 2,2-dimethoxy-2-phenylacetophenone, diethoxyacetophenone, dibutoxyacetophenone, 4-benzoyl-4'-methyl(diphenyl sulfide), 2,4,6-trimethylbenzoyldiphenylphosphine oxide, bis-(2,4,6-trimethylbenzoyl)phenylphosphine oxide (Irgacure 819), bis(2,6-dimethoxybenzoyl)-2,4,4-trimethylpentylphosphine oxide, and the like.

Single oxygen-generating photosensitizers such as Rose Bengal, methylene blue, and tetraphenylporphine as well as polymeric initiators such as poly(ethylene carbon monoxide) and oligo[2-hydroxy-2-methyl-1-[4-(1-methylvinyl)phenyl] propanone] also can be used. Photoinitiators generally provide faster and more efficient initiation. When actinic radiation is used, photoinitiators also can provide initiation at longer wavelengths, which are less costly to generate and present less harmful side effects than shorter wavelengths. When the diluent resins are PET, PEN, polystyrene and the like, photoinitiators that absorb at longer wavelengths in order to allow adequate triggering are beneficial.

When a photoinitiator is included, it can enhance and/or facilitate the initiation of oxygen scavenging by the composition of the present invention upon exposure to radiation. The amount of photoinitiator can depend on the amount and type of cyclic unsaturation present in the polymer, the wavelength and intensity of radiation used, the nature and amount of antioxidants used, and the type of photoinitiator used. The amount of photoinitiator also can depend on how the scavenging composition is used. For instance, if a photoinitiator-containing composition is in a film layer, which is underneath another layer that is somewhat opaque to the radiation used, more initiator might be needed. However, the amount of photoinitiator used for most applications ranges from 0.01 to 10% (by wt.) of the total composition. Oxygen scavenging can be initiated by exposing an article containing the composition of the present invention to actinic or electron beam radiation, as described below.

One or more known antioxidants can be incorporated into the scavenging composition of the present invention to retard degradation of the components during compounding and film formation. Although such additives prolong the induction period for oxygen scavenging activity to occur in the absence of irradiation, the layer or article (and any incorporated photoinitiator) can be exposed to radiation at the time oxygen scavenging properties are required. Suitable antioxidants include but are not limited to 2,6-di(t-butyl)-4-methylphenol (BHT), 2,2'-methylene-bis(6-t-butyl-p-cresol), triphenylphosphite, tris-(nonylphenyl)phosphite, dilaurylthiodipropionate, vitamin E (alpha-tocopherol), octadecyl-3, 5,-di-tert-butyl-4-hydroxyhydrocinnamate, tetrakis[methylene(3,5-di-tert-butyl-4-hydroxyhydrocinnamate)]methane, tetrakis(2,4-di-tert-butylphenyl)-4,4'-biphenyldiphosphonite and the like.

When an antioxidant is included as part of the composition of the present invention, it can be present in an amount which prevents oxidation of the components of the oxygen scavenging composition as well as other materials present in a resultant blend during formation and processing; however, the amount is beneficially less than that which interferes with the scavenging activity of the resultant layer, film, or article after initiation has occurred. The amount needed in a given composition can depend on the components present therein, the particular antioxidant used, the degree and amount of thermal processing used to form the shaped article, and the dosage and wavelength of radiation applied to initiate oxygen scavenging. Typically, such antioxidant(s) are used in an amount of from 0.01 to 1% (by wt.).

Other additives that also can be included in the oxygen scavenging composition of the present invention include, but are not necessarily limited to, fillers, pigments, dyestuffs, processing aids, plasticizers, antifog agents, antiblocking agents, and the like.

The amounts of the components used in the oxygen scavenging composition of the present invention can affect the use and effectiveness of this composition. Thus, the amounts of polymer, transition metal catalyst, and any photoinitiator, antioxidant, polymeric diluents, additives, etc., can vary depending on the desired article and its end use. For example, one of the primary functions of the polymer A (P^{A}) described above is to react irreversibly with oxygen during the scavenging process, while a primary function of the transition metal catalyst is to facilitate this process. Thus, to a large extent, the amount of polymer present affects the oxygen scavenging capacity of the composition, i.e., the amount of oxygen that the composition can consume, while the amount of transition metal catalyst affects the rate at which oxygen is consumed as well as the induction period.

The composition of the present invention can provide oxygen scavenging properties at a desirable rate and capacity while having good processing and compatibility properties. Thus, the present composition can be used to provide, by itself or as a blend with diluent film-forming polymers, such as polyolefins and the like, a packaging material that can be manufactured and processed easily. Further, the subject oxygen scavenging composition will deplete the oxygen within a package cavity without substantially detracting from the color, taste, and/or odor of the product contained therein. In addition, the present oxygen scavenger compositions have enhanced processability both in its formation as a film material and in its handling and processing to form a package article. Finally, the present oxygen scavenger compositions have been found to provide enhanced scavenger properties when used at ambient temperature and at refrigeration temperature conditions.

The amount of the polymeric scavenging component contained in the subject composition needs to be determined based on the end use of the article and can range from 1 to 100%, such as from 5 to 97.5%, from 10 to 95%, from 15 to 92.5%, and from 20 to 90%, (with all of the foregoing percentages being by weight) of the composition or layer made therefrom. Incorporation of low levels of the subject polymeric scavenger, e.g., 1-20% by weight, is preferably used for active barrier applications to prevent oxygen ingress into the container. Higher levels of the subject polymeric scavenger, e.g., 21-100% by wt. can be used for headspace oxygen scavenging applications where large quantities of oxygen need to be removed from the package.

Typically, the amount of transition metal catalyst can range from 0.001 to 1% (by wt.) of the scavenging composition, based on the metal content only (i.e., excluding ligands, counter ions, etc.). Where one or more other scavenging compounds and/or diluent polymers are used as part of the composition, such other materials can make up as much as 99%, such as up to 75%, by weight of the scavenging composition. Any further additives employed normally do not make up more than 10%, such as no more than 5%, by weight of the scavenging composition. As indicated above, the composition of the present invention can be used to produce a scavenging monolayer film, a scavenging layer of a multilayer film, or other articles for a variety of packaging applications. Single layer articles can be prepared readily by extrusion processing and provide a product having low tack properties. Such properties, as discussed above provide enhanced processability in formation of a defect free film and the like packaging article and, further, in processing as part of the finished packaging article. Multilayer films typically are prepared using coextrusion, coating, lamination or extrusion/lamination as taught in, for example, U.S. Pat. Nos. 5,350,622 and 5,529,833, the teachings of which are incorporated herein by reference in their entirety.

At least one of the additional layers of a multilayer article can include a barrier type material having a permeance to oxygen of no more than 5.8x10⁻⁸ cm³/m² -s-Pa (i.e., 500 cm³/m² -24 hours-atm), such as no more than 1.06x10⁻⁸ cm³/m² -s-Pa (i_{.}e_{.}, 100 cm³/m² -24 hours-atm), such as no more than 0.58x10⁻⁸ cm³/m² -s-Pa (i.e., 50 cm³/m² -24 hours-atm) at 25°C. Polymers which are commonly used in such oxygen barrier layers include poly(ethylene/vinyl alcohol) (EVOH), poly(vinyl alcohol) (PVOH), polyacrylonitrile (PAN), copolymers of poly(vinylidene dichloride) (PVDC) (such as with vinyl chloride, (methyl)acrylate, acrylonitrile), polyethylene terephthalate (PET), silica (SiOₓ), and polyamides, such as polycaprolactam (nylon 6), metaxylylene adipamide (MXD6), hexamethylene adipamide (nylon 66), as well as various amide copolymers. Metal foil layers can also provide oxygen barrier properties. Other additional layers can include one or more layers which are permeable to oxygen. In one embodiment, such as flexible packages for food, the layers can include (in order starting from the outside of the package to the innermost layer of the package) (a) an oxygen barrier layer, (b) a scavenging layer, i.e. one that includes a scavenging composition described above, and optionally, (c) an oxygen permeable layer. Control of the oxygen barrier property of layer (a) provides a means to regulate the scavenging life of the package by limiting the rate of oxygen entry to the scavenging layer (b), thus limiting the rate of consumption of scavenging capacity. Control of the oxygen permeability of layer (c) provides a means to set an upper limit on the rate of oxygen scavenging for the overall structure independent of the composition of scavenging layer (b). This can serve the purpose of extending the handling lifetime of the film in the presence of air prior to sealing of the package. Furthermore, layer (c) can provide a barrier to migration of the individual components or by-products of the scavenging layer into the package interior. The term "exposed to the interior" refers to a portion of a packaging article having the subject scavenging composition which is either directly exposed or indirectly exposed (via layers which are O₂ permeable) to the interior cavity having oxygen sensitive product, Even further, layer (c) also can improve the heat sealability, clarity, and/or resistance to blocking of the multilayer film. Further additional layers such as tie layers, easy open layers, and seal layers can also be used. Polymers typically used in such tie layers include, for example, anhydride functional polyolefins.

The method of the present invention includes exposing the above-described composition to a package cavity having an oxygen sensitive product therein. One embodiment provides for including antioxidants and a photoinitiator as part of the subject composition and subjecting a film, layer, or article that includes such a composition to radiation so as to initiate oxygen scavenging on demand at desired rates. In this embodiment, the thermal treatment used in heating and processing the polymers typically used in packaging films (e.g., 100-250°C.) advantageously does not trigger the oxygen scavenging reaction. However, there may exist applications in which triggering is not possible or desired. Therefore, if low amounts of antioxidant are used in the polymer formulation in conjunction with the catalyst it is possible to prepare a composition, which would become actively oxygen scavenging upon extrusion. These materials would need to be used immediately or in some way protected from oxygen during storage.

The initiating radiation is actinic, e.g., UV or visible light having a wavelength of from 200 to 750 nm, such as of from 200 to 600 nm, and from 200 to 400 nm. Such light can be delivered in a continuous or pulsed manner, as described in US 5,211,875 and US 6,449,923 incorporated herein in their entirety as if set forth in full. The layer, films, etc., containing the oxygen scavenging composition can be exposed to such radiation until it receives at least 0.1 J/cm² of scavenging component e.g. polymer A (P^{A}), such as until it receives a dose in the range of 0.4 to 1.6 J/cm². The radiation also can be electron-beam radiation at a dosage of at least 0.2 megarads (2 kGy), such as from 1 to 10 megarads (10 to 100 kGy). Other potential sources of radiation include ionizing radiation such as gamma, X-ray, and corona discharge. Duration of exposure depends on several factors including, but not limited to, the amount and type of photoinitiator present, thickness of the layers to be exposed, thickness and opacity of intervening layers, amount of any antioxidant present, and the wavelength and intensity of the radiation source.

When using oxygen scavenging layers or articles, irradiation can occur during or after the layer or article is prepared. If the resulting layer or article is to be used to package an oxygen sensitive product, exposure can be just prior to, during, or after packaging. For best uniformity of irradiation, exposure occurs at a processing stage where the layer or article is in the form of a flat sheet. For further information on initiation via irradiation, the reader is directed to PCT publications WO 98/05555 and WO 98/05703, as well as PCT 97/13598, 97/13370, 97/13369, the teachings of which are incorporated herein by reference.

Determining the oxygen scavenging rate and capacity of a given oxygen scavenging composition contemplated for a particular use can be beneficial. To determine the rate, the time elapsed before the scavenger depletes a certain amount of oxygen from a sealed container is measured. In some instances the rate can be determined adequately by placing a film containing the desired scavenging composition in an air tight, sealed container of an oxygen-containing atmosphere, e.g., air that typically contains 20.6% (by vol.) O₂ or some other quantity such as 1% (by vol.) O₂. Over time, samples of the atmosphere inside the container are removed to determine the percentage of oxygen remaining. (Usually, the specific rates obtained vary under different temperature and atmospheric conditions. Atmospheres having lower initial oxygen content and/or maintained under low temperature conditions provide a more stringent test of the scavenging ability and rate of a composition. The rates, which follow, are at room temperature and one atmosphere of air, unless otherwise specified.) When an active oxygen barrier is needed, a useful scavenging rate can be as low as 0.05 cm³ oxygen per gram of the polymer in the scavenging composition per day in air at 25° C. and at 1 atm (101.3 kPa). However, in most instances, the present composition has a rate equal to or greater than 5.8x10⁻⁶ cm³/g.S (0.5 cm³/g-day), even up to or greater than 5.8x10⁻⁵cm³/g.S (5 cm³/g-day). Further, films or layers including the subject composition are capable of a scavenging rate greater than 1.2x10⁻⁴ cm³/m².S (10 cm³/m²-day), and under some conditions, greater than 2.9x 10⁻⁴ cm³/m².S (25 cm³/m²-day). (Generally, films or layers deemed suitable for use as an active oxygen barrier can have a scavenging rate as low as 1.2x10⁻⁵ cm³/m².S (1 cm³/m²-day) when measured in air at 25° C. and 101 kPa (1 atm). Scavenging rates suitable for refrigeration temperature conditions are attained with the present composition. Such rates make those layers suitable for scavenging oxygen from within a package, as well as suitable for active oxygen barrier applications.

When the method of the present invention is to be used in an active oxygen barrier application, the initiated oxygen scavenging activity, in combination with any oxygen barriers, can create an overall oxygen permeance of less than 1.1 x 10⁻¹⁰ cm³/m² sPa (1.0 cm³/m²-day-atm) at 25° C. The oxygen scavenging capacity preferably is such that this value is not exceeded for at least two days.

Once scavenging has been initiated, the scavenging composition, layer, or article prepared therefrom preferably is able to scavenge up to its capacity, i.e., the amount of oxygen which the scavenger is capable of consuming before it becomes ineffective. In actual use, the capacity required for a given application can depend on the quantity of oxygen initially present in the package, the rate of oxygen entry into the package in the absence of the scavenging property, and the intended shelf life for the package. When using scavengers that include the composition of the present invention, the capacity can be as low as 1 cm³/g, but can be 50 cm³/g or higher. When such scavengers are in a layer of a film, the layer has an oxygen capacity of at least 4.9 cm³/m² per µm thickness (125 cm³/m²-mil), such as at least 11.5 cm³/m² -µm thickness (300 cm³/m² -mil).

The compositions of the present invention have been found to be capable of providing a film, layer or article which substantially retains its physical properties (e.g., tensile strength and modulus) even after substantial oxygen scavenging has occurred. In addition, the present compositions do not provide significant amounts of by-products and/or effluents, which can impart an undesired taste, color, and/or odor to the packaged product.

The following examples are given as specific illustrations of the claimed invention. It should be understood, however, that the invention is not limited to the specific details set forth in the examples. All parts and percentages in the examples, as well as in the remainder of the specification, are by weight unless otherwise specified.

Further, any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited.

### Example 1

### cis-1,2,3,6-Tetrahydrophthalic Anhydride/1,6-Hexanediol Condensation Polymer (P^{A})

A 500 ml round bottom flask, (RBF), equipped with a stirrer, thermocouple, nitrogen inlet and a distillation head was charged with 156.6 g of 1,6-hexanediol (HD), 200 g of tetrahydrophthalic anhydride (THPA), 0.1400 g of trimethylolpropane (TMOP) and 0.09 g of titanium butoxide. The reaction mixture was heated with distillation at 200°C for one hour, and then the temperature was increased to 230°C and heated for one hour. During this time, 24 g of distillate was collected. The distillate was predominantly water, but also contained some 1,6-hexanediol.

In the second step, 0.09 g of additional titanium butoxide was added and the reaction mixture was heated to 230°C under vacuum (0.2-0.8 mm) and held for three hours. The resulting polymer was cooled to room temperature.

GPC analysis showed the polymer had a Mₙ of 11,364, a M_{w} of 46,155, and a ratio of M_{w}/Mₙ of 4.06. The hydroxyl value was 4.9 meq/g and the acid number was 0.3 meq/g. The formed polymer was a soft, sticky, semisolid material. It exhibited cold flow properties and could not be pelletized. Analysis by Differential Scanning Calorimetry (DSC) showed the polymer had a T_{g} of -39.6°C.

The same procedure as described above was used to prepare polyesters from tetrahydrophthalic anhydride (THPA) and 1,4-butanediol. These polymers typically had Mₙ of ca.13,500, and a M_{w} of ca.45,000, with a hydroxyl value of about 4-5 meq/g and an acid number of < 1 meq/g. These polymers also exhibited cold flow properties and could not be pelletized. Analysis by Differential Scanning Calorimetry (DSC) showed the polymer had a T_{g} of -17.9°C.

### Example II

### Master Batch Preparation

A master batch comprising a transition metal catalyst and a photoinitiator was prepared by a continuous compounding operation. In particular, a dry blend of poly(ethylene/vinylacetate) having approximately 9 % vinylacetate content (EVA-9) was dry blended with 4,4'-dimethylbenzophenone and pellets of cobalt neodecanoate salt by introducing the materials into a Leistritz, intermeshing, twin screw extruder, equipped with a strand die. The amount of Co catalyst used provided about 1 weight percent Co (as metal) and the amount of 4,4'-dimethylbenzophenone was sufficient to also give 1 weight percent of the master batch composition. The strand product was fed through a water bath to cool the resultant material and then was dried with an air knife. The strand was fed through a commercial pelletizer to result in a pelletized product labeled and referred to herein below as "Masterbatch".

### Example III

### Polyester Condensation Polymer B (P^{B})

A series of polyester condensation products were commercially obtained as polymer B (P^{B}) component of the composition of the present invention. These polymers comprise:
- A mixture of dicarboxylic acids composed of sebacic acid, terphthalic acid and isophthalic acid with a mixture of ethylene glycol and neopentyl glycol forming the diol portion. The product has a Tg of 37°C. This product was commercially obtained (Rohm & Haas, Morester 49006) and is herein labeled "B-1". The hydrocarbon monomers (neopentyl glycol and sebacic acid) comprise about 40 mole percent of the total monomers.
- A mixture of dicarboxylic acids composed of terphthalic acid, isophthalic acid, and a minor amount of sebacic acid with a mixture of diols composed of ethylene glycol and neopentyl glycol. The product has a T_{g} of 66°C. This product was commercially obtained (Rohm & Haas, Morester 49021) and is herein labeled "B-2". The hydrocarbon monomers (neopentyl glycol and sebacic acid) comprise about 33 mole percent of the total monomers.

### Example IV

### High Polarity Vinyl acetate Polymers D (P^{D})

A series of high polarity vinyl acetate polymer products were commercially obtained as polymer D (P^{D}) component of the composition of the present invention. These high content vinyl acetate polymers, listed in Table 1 below, are thermoplastic, high molecular weight, substantially non-crystalline polymers exhibiting high polarity. Samples D-0 and D-1 are commercially available polyvinylacetate homopolymers of differing molecular weight.

**Table 1**

| Polymer D (P^{D}) | vinyl acetate | ethylene | Commercial Source |
|---|---|---|---|
| Identification No. | wt. % | wt. % | |
| D-0 | 100 | - | McGean Co (PVA B-15) |
| D-1 | 100 | - | McGean Co (PVA -B-25) |
| D-2 | 80 | 20 | Bayer (Levamelt 800) |
| D-3 | 60 | 40 | Bayer (Levamelt 600) |
| D-4 | 50 | 50 | Bayer (Levamelt 500) |

### Example V

### Oxygen Scavenger Composition

A series of compositions according to the present invention were formed by introducing into the hopper of a Brabender® internal mixer maintained under an nitrogen atmosphere the below indicated amount of polymer A of Example 1 with one of the polymer B of Example 3 or polymer D of Example 4. To the mixer was then added the below indicated amount of the Master Batch ("MB") of Example 2 containing the cobalt catalyst and benzophenone photoinitiator. The components were allowed to mix for approximately 10 minutes while maintaining the mixer at about 300°F (150°C) under Nitrogen atmosphere. The make-up of each composition is indicated in Table 2 below.

After mixing well, the material was poured out onto a TEFLON™ sheet and allowed to cool to room temperature. The blend was cut into approximate 1 inch squares (about 2 g) and pressed into film of approximately 5 mil thickness (about 5 inches diameter) between TEFLON™ sheets using a Carver press at its lowest temperature setting of 140°C.

The pressed scavenging film was cut into a 10 cm x 10 cm piece, exposed to UV-C radiation for 90 seconds (approx. dose = 800 mJ/cm²) using an Anderson-Vreeland exposure unit. The film was then placed into a 16 cm x 24 cm pouch prepared from a commercial barrier film (Cryovac P640B™) and heat-sealed under vacuum. 300 cc of 1% O₂ in N₂ was then introduced via septa. The oxygen content of each pouch was measured at the beginning of the test and after 24 hours by withdrawing 8 cc samples of the atmosphere in the pouch via gas tight syringe and injecting the retrieved sample into a MOCON^{®} Model PAC CHECK™ 650. Samples were stored at either room temperature of 23°C or at refrigerated temperature of about 4°C. The results are reported in Table 3.

**Table 2**

| **Blend** | **P^{A} part by wt.** | **P^{B} part by wt.** | **P^{D} part by wt.** | **MB part by wt.** |
|---|---|---|---|---|
| 1 | 33.3 | B-1/46.2 | - | 20.5 |
| 2 | 33.3 | B-2/54.7 | - | 12.0 |
| 3 | 30.0 | - | D-0/70.0 | 10.0 |
| 3a | 50.0 | - | D-0/50.0 | 10.0 |
| 4 | 30.0 | - | D-1/70.0 | 10.0 |
| 4a | 50.0 | - | D-1/50.0 | 10.0 |
| 5 | 30.0 | - | D-2/70.0 | 10.0 |
| 5a | 50.0 | - | D-2/50.0 | 10.0 |
| 6 | 30.0 | - | D-3/70.0 | 10.0 |
| 6a | 50.0 | - | D-3/50.0 | 10.0 |
| 7 | 30.0 | - | D-4/70.0 | 10.0 |
| 7a | 50.0 | - | D-4/50.0 | 10.0 |

**Table 3**

| **Blend** | **Temp. °C** | **% O₂ @ Day 0** | **% O₂ @ Day 7** | **% O₂ @ Day 14** | **% O₂ @ Day 28** |
|---|---|---|---|---|---|
| 1 | 4 | 1.02 | 0.216 | - | - |
| 1 | 23 | 1.04 | 0.028 | - | - |
| 1 | 23 | 20.8 | 14.7 | 12.9 | 10.9 |
| 2 | 4 | 1.07 | 0.608 | - | - |
| 2 | 23 | 1.36 | 0.448 | - | - |
| 2 | 23 | 20.8 | 17.3 | 15.5 | 13.3 |
| 3 | 4 | 1.06 | 0.133 | 0.116 | 0.043 |
| 3a | 4 | 1.09 | 0.185 | 0.155 | 0.065 |
| 4 | 4 | 1.04 | 0.170 | 0.107 | 0.100 |
| 4a | 4 | 1.12 | 0.136 | 0.109 | 0.035 |
| 5 | 4 | 1.07 | 0.276 | 0.151 | 0.111 |
| 5a | 4 | 1.10 | 0.293 | 0.196 | 0.079 |
| 6 | 4 | 1.10 | 0.219 | 0.107 | 0.073 |
| 6a | 4 | 1.10 | 0.500 | 0.400 | 0.240 |
| 7 | 4 | 1.07 | 0.237 | 0.126 | 0.082 |
| 7a | 4 | 1.10 | 0.411 | 0.305 | 0.148 |

### Example VI

Each of the samples was formed in the same manner as described in Example V above except that the mixtures were further diluted with a low density polyethylene in weight ratios of 30:70 and 70:30. The resultant materials were formed into films by compression molding in the manner described in Example V above. Each of the formed films was observed to be non-tacky to feel with good optical properties.

For comparative purposes, films were formed of polymer A (P^{A}) and MasterBatch without the addition of an ester-containing polymer (P^{B}), (P^{C}) or (P^{D}) with the addition of the low density polyethylene in the same 30:70 and 70:30 weight ratios. The formed films were found to be very tacky and, had poor physical properties for use as a as a packaging material.

### Example VII

A series of samples were made using the procedure detailed in Example V above except that they were formulated with out the aid of a masterbatch by first adding the designated poly(ethylene/vinyl acetate) (EVA) followed by adding cobalt neodecanoate and 4,4'-dimethylbenzophenone directly to give 1000 ppm of cobalt (as metal) and 2000 ppm of benzophenone. The composition of the samples is shown in Table 4 and the oxygen scavenging results (determined by the same procedure as described in Example V above) are shown in Table 5 below.

**Table 4**

| **Blend** | **P^{A} Parts by wt.** | **Diluent Polymer Parts by wt.** | **P^{D} Parts by wt.** |
|---|---|---|---|
| 8 | 30.0 | EVA-28/60.0 | D-0/10.0 |
| 8a | 30.0 | EVA-28/40.0 | D-0/30.0 |
| 8b | 30.0 | EVA-28/10.0 | D-0/60.0 |
| 9 | 30.0 | EVA-18/60.0 | D-0/10.0 |
| 9a | 30.0 | EVA-18/40.0 | D-0/30.0 |
| 9b | 30.0 | EVA-18/10.0 | D-0/60.0 |

**Table 5**

| **Blend** | **Temp. °C** | **% O₂ @ Day 0** | **% O₂ @ Day 7** | **% O₂ @ Day 14** | **% O₂ @ Day 28** |
|---|---|---|---|---|---|
| 8 | 4 | 1.12 | 0.148 | 0.036 | 0.047 |
| 8a | 4 | 1.12 | 0.161 | 0.042 | 0.042 |
| 8b | 4 | 1.11 | 0.167 | 0.048 | 0.050 |
| 9 | 4 | 1.11 | 0.157 | 0.030 | 0.039 |
| 9a | 4 | 1.11 | 0.249 | 0.102 | 0.078 |
| 9b | 4 | 1.11 | 0.160 | 0.042 | 0.065 |

### Example VIII

### Blends with Polylactone Polymer C (P^{C})

A series of samples were made in accordance with the present invention using the procedure detailed in Example V. These samples were formulated to evaluate the optical and physical properties and so were made without cobalt and photoinitiator package. The poly(caprolactone) used in blend 10 was obtained from Aldrich (Mₙ ca.42,500). The poly(caprolactone) used in blends 11-17 was obtained from Dow Chemical (Tone™P-787). The diluent polymers used were selected from poly(ethylene.vinylacetate) (EVA); poly(ethylene/methacrylic acid) (EMAA); or linear low density polyethylene. The results are shown in Table 6.

**Table 6**

| **Blend** | **P^{A} Parts by wt.** | **P^{C} Parts by wt** | **Diluent Polymer Parts by wt.** | **Comments** |
|---|---|---|---|---|
| 10 | 50.0 | 50.0 | - | Not tacky, good contact clarity |
| 11 | 15.0 | 15.0 | EVA-9/70.0 | Slightly tacky, slightly hazy |
| 12 | 25.0 | 25.0 | EVA-9/50.0 | tacky |
| 13 | 15.0 | 5.0 | EMAA-12/80.0 | Not tacky good optics |
| 14 | 15.0 | 15.0 | EMAA-12/70.0 | Not tacky good optics |
| 15 | 15.0 | 15.0 | EVA-13/70.0 | Not tacky, slightly hazy |
| 16 | 25.0 | 25.0 | EVA-13/50.0 | Not tacky, slightly hazy |
| 17 | 15.0 | 15.0 | LLDPE/70.0 | Tacky, slightly hazy |

## Claims

1. A packaging material having at least one layer, at least one layer comprises an oxygen scavenger composition comprising a transition metal salt, compound or complex and a polymer blend comprising
(A) at least one first polymer (P^{A}) composed of mer units derived from
(a) at least one or a mixture of substituted alicyclic compounds having non-aromatic, ethylenic functionality according to the following representation: 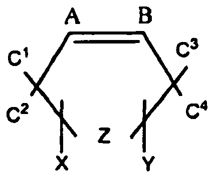 wherein
A, B, C¹, C², C³, C⁴ each independently represents hydrogen or a C_{q}H_{2q+1} hydrocarbyl group with q being an integer in the range of from 0 to 20, provided that either A or B and at least one of C¹, C², C³, C⁴ are hydrogen atoms and each carbon atom of the alicyclic ring is fully substituted by groups selected from hydrogen, hydrocarbyl, X groups, Y groups and mixtures thereof;
X and Y each independently or together represents functional groups that is capable of being part of a heteroatom containing linkage forming a covalent bond linkage between the cycloalkenyl containing group and other mer groups forming the first polymer segment; and
Z being selected from a -(CₜH₂ₜ)- hydrocarbyl group with t being an integer in the range from 1-4; and
(b) at least one or a mixture of di- or polyfunctional hydrocarbon compounds according to the following representation:
**G-R**¹**(-G)**,
wherein
R¹ represents a non-aromatic or aromatic hydrocarbon group; and each G independently represents a functional group capable of being part of heteroatom containing linkage between the hydrocarbon group R¹ and the other mer groups forming the first prepolymer segment; and
x is at least I : and
(B) at least one or a mixture of second polymer selected from the group consisting of:
1) polyester condensation polymer B (P^{B}) having mer units derived from at least one or a mixture ofdihydroxy group containing hydrocarbon compounds comprising compounds represented by the following general formula:
**HO-R²-OH**
and at least one or a mixture of dicarboxylic acid group containing hydrocarbon compound comprising compounds represented by the following general formula:
**HOOC- R³-COOH**
wherein
R² and R³ are independently selected from aliphetic or aromatic hydrocarbylene groups, provided R² or R³ or both are selected from C₄ or higher aliphatic hydrocarbylene groups to provide at least about 25 mole percent of the resultant polymer B (P^{B}); and, when amorphous, having a T_{B} of from 20 to 80 and, when crystalline, having a T_{B} lower than 20 °C and a Tₘ of greater than 20 °C;
2) a polylactone polymer C (P^{C}) having mer units derived from cyclic esters represented by the formula: 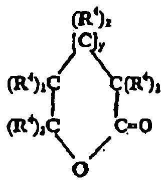 wherein
each R⁴ is independently selected from hydrogen or a C₁-C₃ hydrocarbyl group, and
y is an integer of from 0 to 3,
provided at least about 50 weight percent of said polymer C (P^{C}) comprises aliphatic hydrocarbon groups and said polymer has a T_{g} lower than 20 °C and a Tₘ of greater than 20 °C;
and
3) a polymer D (P^{D}) comprising polyvinylacetate or a copolymer derived from vinyl acetate and a C₂ or C₃ olefin or mixtures thereof having at least 50 weight percent vinyl acetate mer units therein.

2. The packaging material of Claim I wherein said second polymer is selected from at least one polyester condensation polymer B (P^{B}) having mer units derived from at least one or a mixture of dihydroxy group containing hydrocarbon compounds comprising compounds represented by the following general formula:
**HO-R²-OH**
and at least one or a mixture of dicarboxylic acid group containing hydrocarbon compound comprising compounds represented by the following general formula:
**HOOC- R³-COOH**
wherein
R² and R³ are independently selected from aliphatic or aromatic hydrocarbylene groups, provided R² or R³ or both are selected from C₄ or higher aliphatic hydrocarbylene groups to provide at least about 25 mole percent of the resultant polymer B (P^{B}).

3. The packaging material of Claim 1 or 2 wherein the second polymer is selected from at least one polylactone polymer C (P^{C}) having mer units derived from cyclic esters represented by the formula: 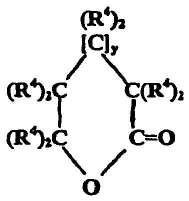 wherein
each R⁴ is independently selected from hydrogen or a C₁-C₃ hydrocarbyl group; and
y is an integer of 1 or 2.

4. The packaging material of any one of the preceding claims wherein the second polymer comprises a polyvinyl acetate homopolymer.

5. The packaging material of any one of claims 1 to 3 wherein the second polymer comprises a copolymer having mer units derived from vinyl acetate and ethylene, at least 50 weight percent of the mer units are derived from vinyl acetate.

6. The packaging material of Claim 2 wherein R³ of the second polymer B (P^{B}) is selected from C₆-C₂₀ aliphatic hydrocarbylene.

7. The packaging material of Claim 3 wherein the polymer C (P^{C}) is polycaprolactone.

8. The packaging material of any one of the preceding claims wherein functional groups X, Y and G of said first polymer (P^{A}) are each independently selected from the group consisting of -(CH₂)ₙ-OH, -(CH₂)ₙ-NH₂, -(CH₂)ₙ-N=C=O and -(CH₂)ₙ-C=O)-D with n being an integer in the range from 0 to 20 and D being selected from a halide atom or an OR group wherein R is an -H or C₁-C₁₂ alkyl group, or X and Y together or two G groups together represent -((CH₂)ₙ-C=O)ₓ-D with n being an integer in the range from 0 to 20, D is oxygen atom and x is 2, provided that said functional groups have a molar ratio of (i) hydroxyl and amino functional groups to (ii) carboxylic acid, carboxylic acid ester and carboxylic acid halide functional groups of about 1:1.

9. The packaging material of Claim 2, 3, 4 or 5 wherein polymer (P^{A}) functional groups have a molar ratio of (i) hydroxyl and amino functional groups to (ii) carboxylic acid, carboxylic acid ester and carboxylic acid halide functional groups of about 1:1 to 1:1.1.

10. The packaging material of claim 2, 3, 4 or 5 wherein the (a) of said first polymer (P^{A}) is selected from tetrahydrophthalic acid, dimethyl tetrahydrophthalate, tetrahydrophthalic anhydride or mixtures thereof.

11. The packaging material of claim 2, 3, 4 or 5 wherein (b) of said first polymer (P^{A}) is selected from C₂-C₂₀ alkylene glycol or poLy(C₂-C₄ alkylene) glycol.

12. The packaging material of any one of the preceding claims wherein said at least one layer comprising the oxygen scavenging composition further comprises a second polymer selected from a film forming semicrystalline polymer.

13. The packaging material of Claim 1, 2, 3, 4, 5, 6, 7 or 8 wherein said at least one layer comprising the oxygen scavenging composition further comprises a second polymer selected from polyolefins homo- and copolymers.

14. The packaging material of any one of the preceding claims wherein said material is a film having a thickness of from 5 to 260 micrometers.

15. The packaging material of any one of the preceding claims wherein said material is a semi-rigid or rigid structure having a thickness of from 100 to 1000 micrometers.

16. A packaging material comprising a laminated product comprising a plurality of layers including:
i) at least one layer comprising the composition of Claim 1, 2, 3, 4, 5, 6, 7 or 8; and
ii) at least one layer comprising a material selected from the group consisting of
a) a polymeric article,
b) a paper article,
c) a cardboard article, and
d) a metal article.

## Patentansprüche

1. Verpackungsmaterial mit mindestens einer Schicht, wobei mindestens eine Schicht eine Sauerstoff abfangende Zusammensetzung umfasst, die ein Übergangsmetallsalz, eine Übergangsmetallverbindung oder einen Übergangsmetallkomplex und eine Polymermischung umfasst, die
(A) mindestens ein erstes Polymer (P^{A}) aus Monomereinheiten abgeleitet von
(a) mindestens einer oder einer Mischung von substituierten alicyclischen Verbindungen mit nichtaromatischer, ethylenischer Funktionalität gemäß der folgenden Wiedergabe: 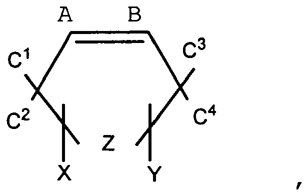 worin A, B, C¹, C², C³, C⁴ jeweils unabhängig Wasserstoff oder eine C_{q}H_{2q+1} Kohlenwasserstoffgruppe darstellen, wobei q eine ganze Zahl im Bereich von 0 bis 20 ist, vorausgesetzt, dass entweder A oder B und mindestens einer von C¹, C², C³, C⁴ Wasserstoffatome sind und jedes Kohlenstoffatom des alicyclischen Rings vollständig durch Gruppen ausgewählt aus Wasserstoff, Kohlenwasserstoff, X-Gruppen, Y-Gruppen und Mischungen davon substituiert ist,
X und Y jeweils unabhängig oder zusammen funktionelle Gruppen darstellen, die Teil einer ein Heteroatom enthaltenden Verknüpfung sein können, die eine kovalente Bindungsverknüpfung zwischen der Cycloalkenyl enthaltenden Gruppe und anderen das erste Polymersegment bildenden Monomergruppen ausbilden kann, und
Z ausgewählt ist aus einer -(CₜH₂ₜ)-Kohlenwasserstoffgruppe, wobei t eine ganze Zahl im Bereich von 1 bis 4 ist, und
(b) mindestens einer oder einer Mischung von di- oder polyfunktionalen Kohlenwasserstoffverbindungen gemäß folgender Darstellung:
G-R¹(-G)ₓ
worin R¹ eine nicht-aromatische oder aromatische Kohlenwasserstoffgruppe darstellt und jedes G unabhängig eine funktionelle Gruppe darstellt, die Teil einer ein Heteroatom enthaltenden Verknüpfung zwischen der Kohlenwasserstoffgruppe R¹ und den anderen das erste Prepolymersegment bildenden Monomergruppen sein kann, und x mindestens 1 ist, und
(B) mindestens ein oder eine Mischung von zweitem Polymer umfasst ausgewählt aus der Gruppe bestehend aus
1) Polyesterkondensationspolymer B (P^{B}) mit Monomereinheiten abgeleitet von mindestens einem oder einer Mischung von Dihydroxygruppe enthaltenden Kohlenwasserstoffverbindungen, die Verbindungen gemäß der folgenden allgemeinen Formel umfassen
**HO-R²-OH,**
und mindestens einer oder einer Mischung von Dicarbonsäuregruppe enthaltender Kohlenwasserstoffverbindung, die Verbindungen gemäß der nachfolgenden allgemeinen Formel umfasst
**HOOC- R³-COOH,**
worin R² und R³ ausgewählt sind aus aliphatischen oder aromatischen Kohlenwasserstoffgruppen, vorausgesetzt R² oder R³ oder beide sind ausgewählt aus C₄ oder höheren aliphatischen Kohlenwasserstoffgruppen, um mindestens etwa 25 Mol.% des resultierenden Polymer B (P^{B}) zu liefern,
und, wenn amorph, mit einer Tg von 20 bis 80 und, wenn kristallin, mit einer Tg von weniger als 20°C und einer Tₘ von mehr als 20°C,
2) Polylactonpolymer C (P^{C}) mit Monomereinheitenabgeleitet von cyclischen Estern wiedergegeben durch die Formel 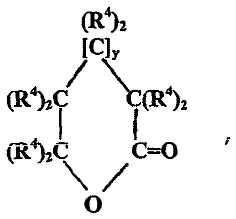 worin jedes R⁴ unabhängig ausgewählt ist aus Wasserstoff oder einer C₁-C₃ Kohlenwasserstoffgruppe und y eine ganze Zahl von 0 bis 3 ist, vorausgesetzt dass mindestens etwa 50 Gew.% des Polymer C (P^{C}) aliphatische Kohlenwasserstoffgruppen umfassen und das Polymer eine T_{g} von weniger als 20°C und eine Tₘ von größer als 20°C aufweist, und
3) einem Polymer D (P^{D}), das Polyvinylacetat oder ein Copolymer umfasst, das abgeleitet ist von Vinylacetat und einem C₂- oder C₃-Olefin oder Mischungen davon und mindestens 50 Gew.% Vinylacetat-Monomereinheiten enthält.

2. Verpackungsmaterial nach Anspruch 1, bei dem das zweite Polymer ausgewählt ist aus mindestens einem Polyesterkondensationspolymer B (P^{B}) mit Monomereinheiten, die von mindestens einem oder einer Mischung von Dihydroxygruppe enthaltenden Kohlenwasserstoffverbindungen, die Verbindungen gemäß der folgenden allgemeinen Formel umfassen
**HO-R²-OH,**
und mindestens einer oder eine Mischung von Dicarbonsäuregruppe enthaltender Kohlenwasserstoffverbindung abgeleitet sind, die Verbindungen mit der folgenden allgemeinen Formel umfassen
**HOOC-R³-COOH,**
worin R² und R³ unabhängig ausgewählt sind aus aliphatischen oder aromatischen Kohlenwasserstoffgruppen, vorausgesetzt R² oder R³ oder beide sind ausgewählt aus C₄ oder höher aliphatischen Kohlenwasserstoffgruppen, um mindestens etwa 25 Mol.% des resultierenden Polymer B(P^{B}) zu liefern.

3. Verpackungsmaterial nach Anspruch 1 oder 2, bei dem das zweite Polymer ausgewählt ist aus mindestens einem Polylactonpolymer C (P^{C}) mit Monomereinheiten abgeleitet von cyclischen Estern gemäß der Formel 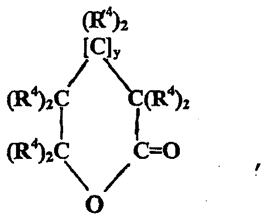 in der jedes R⁴ unabhängig ausgewählt ist aus Wasserstoff oder einer C₁-C₃-Kohlenwasserstoffgruppe und y eine ganze Zahl von 1 oder 2 ist.

4. Verpackungsmaterial nach einem der vorangehenden Ansprüche, bei dem das zweite Polymer ein Polyvinylacetathomopolymer umfasst.

5. Verpackungsmaterial nach einem der Ansprüche 1 bis 3, bei dem das zweite Polymer ein Copolymer mit Monomereinheiten abgeleitet von Vinylacetat und Ethylen umfasst, wobei mindestens 50 Gew.% der Monomereinheiten von Vinylacetat abgeleitet sind.

6. Verpackungsmaterial nach Anspruch 2, bei dem R³ des zweiten Polymer B (P^{B}) ausgewählt ist aus C₆-C₂₀ aliphatischen Kohlenwasserstoffgruppen.

7. Verpackungsmaterial nach Anspruch 3, bei dem das Polymer C (P^{C}) Polycaprolacton ist.

8. Verpackungsmaterial nach einem der vorangehenden Ansprüche, bei dem die funktionellen Gruppen X, Y und G des ersten Polymer (P^{A}) jeweils unabhängig ausgewählt sind aus der Gruppe bestehend aus -(CH₂)ₙ-OH, -(CH₂)ₙ-NH₂, -(CH₂)ₙ-N=C=O und - (CH₂)ₙ-C=O)-D, wobei n eine ganze Zahl im Bereich von 0 bis 20 ist und D ausgewählt ist aus einem Halogenatom oder einer OR-Gruppe, wobei R eine H- oder C₁-C₁₂ Alkylgruppe ist, oder X und Y zusammen oder zwei G-Gruppen zusammen -((CH₂)ₙ-C=O)ₓ-D darstellen, wobei n eine ganze Zahl im Bereich von 0 bis 20 ist, D ein Sauerstoffatom ist und x 2 ist, vorausgesetzt, dass die funktionellen Gruppen ein Molverhältnis von (i) funktionellen Hydroxyl- und Aminogruppen zu (ii) funktionellen Carbonsäure-, Carbonsäureester- und Carbonsäurehalogenidgruppen von etwa 1:1 aufweisen.

9. Verpackungsmaterial nach Anspruch 2, 3, 4 oder 5, bei dem die funktionellen Gruppen des Polymer (P^{A}) ein Molverhältnis von (i) funktionellen Hydroxyl- und Aminogruppen zu (ii) funktionellen Carbonsäure-, Carbonsäureester- und Carbonsäurehalogenidgruppen von etwa 1:1 bis 1:1,1 aufweisen.

10. Verpackungsmaterial nach Anspruch 2, 3, 4 oder 5, bei dem (a) des ersten Polymer (P^{A}) ausgewählt ist aus Tetrahydrophthalsäure, Dimethyltetrahydrophthalat, Tetrahydrophthalsäureanhydrid oder Mischungen davon.

11. Verpackungsmaterial nach Anspruch 2, 3, 4 oder 5, bei dem (b) des ersten Polymer (P^{A}) ausgewählt ist aus C₂-C₂₀ Alkylenglycol oder Poly-(C₂-C4-alkylen)glycol.

12. Verpackungsmaterial nach einem der vorangehenden Ansprüche, bei dem die mindestens eine die Sauerstoff abfangende Zusammensetzung umfassende Schicht außerdem ein zweites Polymer ausgewählt aus einem Film bildenden, semikristallinen Polymer umfasst.

13. Verpackungsmaterial nach Anspruch 1, 2, 3, 4, 5, 6, 7 oder 8, bei dem die mindestens eine die Sauerstoff abfangende Zusammensetzung enthaltende Schicht außerdem ein zweites Polymer ausgewählt aus Polyolefinhomo- und -copolymeren umfasst.

14. Verpackungsmaterial nach einem der vorangehenden Ansprüche, bei dem das Material eine Folie mit einer Dicke von 5 bis 260 µm ist.

15. Verpackungsmaterial nach einem der vorangehenden Ansprüche, bei dem das Material eine halbfeste oder feste Struktur mit einer Dicke von 100 bis 1000 µm ist.

16. Ein laminiertes Produkt umfassendes Verpackungsmaterial umfassend eine Vielzahl von Schichten einschließlich
i) mindestens eine Schicht, die die Zusammensetzung gemäß Anspruch 1, 2, 3, 4, 5, 6, 7 oder 8 umfasst, und
ii) mindestens eine Schicht, die ein Material ausgewählt aus der Gruppe bestehend aus
a) einem polymeren Gegenstand,
b) einem Papiergegenstand,
c) einem Pappgegenstand und
d) einem Metallgegenstand umfasst.

## Revendications

1. Matériau d'emballage ayant au moins une couche, au moins une couche comprend une composition éliminatrice d'oxygène comprenant un sel, composé ou complexe métallique de transition et un mélange de polymères comprenant
(A) au moins un premier polymère (P^{A}) constitué d'unités de mers dérivées de
(a) au moins un ou un mélange de composés alicycliques substitués ayant une fonctionnalité non aromatique, éthylénique, selon la représentation suivante: 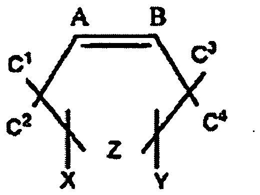 où
A, B, C¹, C², C³, C⁴ représentent chacun indépendamment de l'hydrogène ou un groupe C_{q}H_{2q+1} hydrocarbyle, q étant un entier dans la plage de 0 à 20, à condition que soit A soit B et au moins un de C¹, C², C³, C⁴ soient des atomes d'hydrogène et que chaque atome de carbone du cycle alicyclique soit entièrement substitué par des groupes sélectionnés parmi hydrogène, hydrocarbyle, groupes X, groupes Y et leurs mélanges;
X et Y représentent chacun indépendamment ensemble des groupes fonctionnels, qui est apte à faire partie d'une liaison contenant de l'hétéroatome formant une liaison covalente entre le groupe contenant cycloalkényle et d'autres groupes de mer formant le premier segment de polymère; et
Z étant sélectionné parmi un groupe -(C₁H₂ₜ)-hydrocarbyle, t étant un entier dans la plage de 1 à 4; et
(b) au moins un ou un mélange de composés d'hydrocarbure di- ou polyfonctionnels selon la représentation suivante:
G-R'(-G),
où
R' représente un groupe d'hydrocarbure non-aromatique ou aromatique; et
chaque G représente indépendamment un groupe fonctionnel apte à faire partie d'une liaison contenant un hétéroatome entre le groupe d'hydrocarbure R' et les autres groupes de mer formant le premier segment de prépolymère; et
x est au moins 1; et
(B) au moins un ou un mélange d'un deuxième polymère sélectionné dans le groupe consistant en:
1) polymère B de condensation de polyester (P^{B}) ayant des unités de mer dérivées d'au moins un ou d'un mélange de composés d'hydrocarbure contenant un groupe dihydroxy comprenant des composés représentés par la formule générale suivante:
HO-R²-OH
et au moins un ou un mélange de composés d'hydrocarbures contenant un groupe d'acide dicarboxylique comprenant des composés représentés par la formule générale suivante:
HOOC-R³-COOH
où
R² et R³ sont indépendamment sélectionnés dans des groupes d'hydrocarbylène aliphatique ou aromatique, à condition que R² ou R³ ou les deux soient sélectionnés parmi des groupes d'hydrocarbylène aliphatique C₄ ou plus élevés pour fournir au moins environ 25 pour cent en mole du polymère obtenu B (P^{B}); et, lorsqu'ils sont amorphes, ayant un T₈ de 20 à 80 et, lorsqu'ils sont cristallins, ayant un Tg inférieur à 20°C et un Tₘ supérieur à 20°C;
2) un polymère de polyactone. C (P^{C}) ayant des unités de mer dérivées d'esters cycliques représentés par la formule: 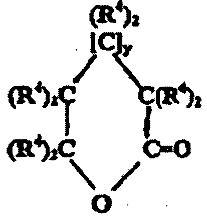 où
chaque R⁴ est indépendamment sélectionné parmi hydrogène ou un groupe hydrocarbyle C₁-C₃, et
y est un entier de 0 à 3,
à condition qu'au moins environ 50 pour cent en poids dudit polymère C (P^{C}) comprenne des groupes d'hydrocarbure aliphatique et que ledit polymère ait un Tg inférieur à 20°C et un Tₘ supérieur à 20°C;
ou
3) un polymère D (P^{D}) comprenant du polyvinylacétate ou un copolymère dérivé du vinyl acétate et une oléfine C₂ ou C₃ ou des mélanges de ceux-ci ayant au moins 50 pour cent en poids d'unités de mer d'acétate de vinyle dans ceux-ci.

2. Matériau d'emballage selon la revendication 1, dans lequel ledit deuxième polymère est sélectionné parmi au moins un polymère B de condensation de polyester (P^{B}) ayant des unités de mer dérivées d'au moins un ou d'un mélange de groupes dihydroxy contenant des composés d'hydrocarbure comprenant des composés représentés par la formule générale suivante:
HO-R²-OH
et au moins un ou un mélange de groupe d'acide dicarboxylique contenant un composé d'hydrocarbure comprenant des composés représentés par la formule générale suivante:
HOOC-R³-COOH
où
R² et R³ sont indépendamment sélectionnés parmi des groupes d'hydrocarbylène aliphatique ou aromatique, à condition que R² ou R³ ou les deux soient sélectionnés parmi des groupes d'hydrocarbylène aliphatique C₄ ou plus élevé pour donner au moins environ 25 pour cent en mole du polymère obtenu B (P^{B}).

3. Matériau d'emballage selon la revendication 1 ou 2, dans lequel le deuxième polymère est sélectionné parmi au moins un polymère de polylactone C (P^{C}) ayant des unités de mer dérivées d'esters cycliques représentés par la formule: 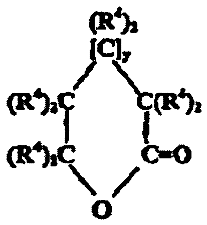 où
chaque R⁴ est indépendamment sélectionné parmi hydrogène ou un groupe hydrocarbyle C₁-C₃; et
y est un entier de 1 ou 2.

4. Matériau d'emballage selon l'une quelconque des revendications précédentes, dans lequel le deuxième polymère comprend un homopolymère de polyvinyl acétate.

5. Matériau d'emballage selon l'une quelconque des revendications 1 à 3, dans lequel le deuxième polymère comprend un copolymère ayant des unités de mer dérivées de vinyl acétate et d'éthylène, au moins 50 pour cent en poids des unités de mer sont dérivés du vinyl acétate.

6. Matériau d'emballage selon la revendication 2, où R³ du deuxième polymère B (PB) est sélectionné parmi l'hydrocarbylène aliphatique C₆-C₂₀.

7. Matériau d'emballage selon la revendication 3, où le polymère C (P^{C}) est le polycaprolactone.

8. Matériau d'emballage selon l'une quelconque des revendications précédentes, dans lequel les groupes fonctionnels X, Y et G dudit premier polymère (P^{A}) sont chacun sélectionnés indépendamment du groupe consistant en -(CH₂)ₙ-OH, -(CH₂)ₙ-NH₂, -(CH₂)ₙ-N=C=O et -(CH₂)ₙ-C=O)-D, n étant un entier dans la plage de 0 à 20, et D étant sélectionné parmi un atome d'halogénure ou un groupe OR, où R est un groupe alkyle -H ou C₁-C₁₂, ou bien X et Y ensemble ou deux groupes G ensemble représentent -((CH₂)ₙ-C=O)ₓ-D, n étant un entier dans la plage de 0 à 20, D est atome d'oxygène et x est 2, à condition que lesdits groupes fonctionnels aient un rapport molaire de (i) de groupes hydroxyle et amino fonctionnels à (ii) l'acide carboxylique, l'ester d'acide carboxylique et des groupes fonctionnels d'halogénure d'acide carboxylique d'environ 1:1.

9. Matériau d'emballage selon la revendication 2, 3, 4 ou 5, où les groupes fonctionnels polymères (P^{A}) ont un rapport molaire de (i) groupes hydroxyles et amino fonctionnels à (ii) l'acide carboxylique, l'ester de l'acide carboxylique et les groupes fonctionnels d'halogénure de l'acide carboxylique d'environ 1:1 à 1:1,1.

10. Matériau d'emballage selon la revendication 2, 3, 4 ou 5, dans lequel le (a) dudit premier polymère (P^{A}) est sélectionné parmi l'acide tétrahydrophtalique, le diméthyl tétrahydrophtalate, l'anhydride tétrahydrophtalique ou leurs mélanges.

11. Matériau d'emballage selon la revendication 2, 3, 4 ou 5, où (b) dudit premier polymère (P^{A}) est sélectionné parmi alkylène glycol C₂-C₂₀ ou poly alkylène glycol C₂-C₄.

12. Matériau d'emballage selon l'une quelconque des revendications précédentes, dans lequel ladite au moins une couche comprenant la composition éliminatrice d'oxygène comprend en outre un deuxième polymère sélectionné parmi un polymère semi-cristallin de formation de film.

13. Matériau d'emballage selon la revendication 1, 2, 3, 4, 5, 6, 7 ou 8, où ladite au moins une couche comprenant la composition éliminatrice d'oxygène comprend en outre un deuxième polymère sélectionné parmi des homo- et copolymères de polyoléfines.

14. Matériau d'emballage selon l'une quelconque des revendications précédentes, où ledit matériau est un film d'une épaisseur de 5 à 260 micromètres.

15. Matériau d'emballage selon l'une quelconque des revendications précédentes, dans lequel ledit matériau est une structure semi-rigide ou rigide d'une épaisseur de 100 à 1000 micromètres.

16. Matériau d'emballage comprenant un produit laminé comprenant une pluralité de couches incluant:
i) au moins une couche comprenant la composition de la revendication 1, 2, 3, 4, 5, 6, 7 ou 8; et
ii) au moins une couche comprenant un matériau sélectionné dans le groupe consistant en
a) un article polymère,
b) un article en papier,
c) un article en carton, et
d) un article métallique.
